# EUROPÄISCHE PATENTSCHRIFT

(11) **EP 1 068 457 B1**
(45) Veröffentlichungstag und Bekanntmachung des Hinweises auf die Patenterteilung: **29.12.2004**
(21) Anmeldenummer: 99922075.9
(22) Anmeldetag: 25.03.1999
(51) Int. Cl.: F16B 1/00

(54) **VERFAHREN UND WERKZEUG ZUM VERBINDEN VON BAUTEILEN MIT EINER PLATTE**
METHOD AND TOOL FOR JOINING COMPONENTS TO A PLATE
PROCEDE ET OUTIL POUR RELIER DES COMPOSANTS A UNE PLAQUE

(30) Priorität: 25.03.1998 DE 19813007
(43) Veröffentlichungstag der Anmeldung: 17.01.2001
(73) Patentinhaber: TOX-PRESSOTECHNIK GmbH, D-88250 Weingarten (DE)
(72) Erfinder: RAPP, Eugen, D-88276 Berg (DE); Walther, Dieter Dr., 88212 Ravensburg (DE)
(74) Vertreter: Schuster, Gregor, Dipl.-Ing.
(86) Internationale Anmeldenummer: PCT/DE1999/000904
(87) Internationale Veröffentlichungsnummer: WO 1999/049227

(56) Entgegenhaltungen:
- WO-A-93/10925
- DE-A- 4 333 052
- DE-A- 4 404 659
- DE-A- 4 419 065
- DE-A- 19 700 627
- DE-A- 19 726 457
- US-A- 4 459 073
- US-A- 4 760 634

## Beschreibung

### Stand der Technik

Die Erfindung geht aus von einem Verfahren nach der Gattung des Hauptanspruchs und von einer Pressvorrichtung nach der Gattung des Anspruchs 4. Unter dem gattungsgemäßen Verbinden von Bauteilen an einer Platte ist gemeint, dass an einer Platte, die bevorzugt aus relativ dünnem Blech besteht, aber auch aus Kunststoff und sonstigen verformbaren und quetschbaren Materialien bestehen kann, andere Bauteile unlösbar befestigt werden, wobei es sich bei diesen Bauteilen sowohl um aus der Ebene des Bleches herausragende Elemente wie Muttern, Gewindebolzen, Einhakkopplungen udgl. handeln kann, als auch um andere Platten, die mit der genannten Platte verbunden werden sollen. Ein wichtiges Element dieser Verbindung ist der verlorene Stempel, der nach dem Verbindungsvorgang als quasi Niet- oder Werkstück in der Platte verbleibt.

Bei einem bekannten Verfahren bzw. einer bekannten Pressvorrichtung (DE-PS 30 03 908, US-PS 4,459,073) wird mittels eines Stanznietvorgangs ein Stehbolzen, der einerseits ein Gewinde aufweist und andererseits einen Stempel, mit dem Stempel in eine Platte gepresst, wobei in eine dem Stempel gegenüberliegende Matrize Flächenabschnitte aus der Platte gestanzt und die Randbereiche der Stanzöffnungen verdrängt werden. Der Stempel ist in Art einer Lochstanze ausgebildet, mit Hilfe deren Schneidkante ein entsprechendes Plattenteil herausgestanzt wird, während außerhalb dieser Ausstanzung gelegene Flächenabschnitte der Platte durch die Matrize verbördelt werden. In der Matrize ist ein gegenwirkender Stempel angeordnet mit einem zentralen Spreizkörper, über den in einem weiteren Arbeitsgang der Schneidring des Stempels auseinandergedrückt, also aufgeweitet wird und damit den tiefgezogenen Lochkranz der Platte hintergreift. Abgesehen davon, dass das hierfür erforderliche Werkzeug der Matrize mit Spreizkörper technisch aufwendig ist und einer nicht unerheblichen Abnutzung unterliegt, besteht der Nachteilt, dass der Stempel aus verhältnismäßig weichem Material bestehen muss, um einerseits nach dem Durchstoßen der Platte aufgeweitet und danach in der Matrizenöffnung unter den Tiefziehrand fließen zu können. Entsprechend dem Stempelteil ist dann auch der das Gewinde aufweisende Bolzenteil dieses Stehbolzens aus verhältnismäßig weichem Material mit all den damit gegebenen Nachteilen. Ein wesentlicher Nachteil besteht auch darin, dass um diese Befestigung zu erhalten, die Platte durchstoßen werden muss und damit nicht nur an Festigkeit verliert, sondern auch undichte Stellen entstehen und wobei das Stempelmaterial wiederum eine Mindesthärte aufweisen muss, um den Stanzvorgang vollziehen zu können, was im Widerspruch zu der für die Verformung erforderlichen Weiche des Materials steht.

Dem erfindungsgemäßen Verfahren bzw. einer erfindungsgemäßen Vorrichtung zur Durchführung des Verfahrens liegt demgegenüber die Aufgabe zugrunde, dass nach dem Tiefziehen und Quetschen des Materials eine formschlüssige Verbindung zwischen Bauteil und Platte hoher Festigkeit besteht.

Bei einem anderen bekannten Verfahren bzw. Werkzeug der gattungsgemäßen Art (WO 93/10925) weist der verlorene Stempel auf seiner der Platte zugewandten Seite eine Nachinnenwölbung auf, die eine Schneidkante bildet, um dadurch bereits beim Tiefziehvorgang ein Fließen des verlorenen Stempels zu bewirken, wobei das Material des verlorenen Stempels weich sein muss, um ein Durchschneiden der Platte zu vermeiden. Entsprechend der Materialhärte ist auch ein solcher Verbindungspunkt relativ nachgiebig, so dass ein wesentlicher Vorteil des verlorenen Stempels, nämlich den Druckkopfcharakter eines solchen Verbindungspunktes zu unterbinden, nicht in der gewünschten Weise gewährleistet ist.

Beim bekannten gattungsgemäßen Verfahren (WO 93/10925 A) hingegen muss die Matrize nachgiebige Wände aufweisen, um das Werkstück mit seinem Kragen aus der Matrize entfernen zu können.

Das erfindungsgemäße Verfahren und die erfindungsgemäße Pressvorrichtung mit den Merkmalen des Hauptanspruchs bzw. des Anspruchs 4 haben demgegenüber den Vorteil, dass einerseits eine äußerst feste Verbindung zwischen Platte und Bauteilen entsteht und dass andererseits weder Undichtheiten noch Schwächungen infolge von Öffnungen in einer Platte entstehen. Durch das Tiefziehen des Plattenmaterials wird dieses abschnittsweise verdünnt und in Tiefziehrichtung verbracht, wofür etwa 20% des insgesamt erforderlichen Kraftaufwandes nötig ist. Die anderen 80% sind ansteigend für den danach erfolgenden Quetschvorgang zwischen Stirnseite des Stempels und dem Boden der Matrize nötig, wobei das tiefgezogene Material zuerst radial nach außen und dann durch die unnachgiebigen Wände der Matrize wieder in Richtung Stempel fließt, diesen formschlüssig einbindend in Art des Nietes. Der Stempel kann gegen Ende dieses Quetschvorgangs aufgrund der nunmehr einsetzenden höheren Kräfte ebenfalls verformt werden. Das Ganze erfolgt in nur einem Arbeitsgang. Maßgebend ist, dass der Stempel sowohl als Tiefziehwerkzeug, als auch "verlorener Niet" dient.

Für eine gleichbleibende Qualität ist das Material des Stempels härter als jenes der Platte, um zu erreichen, dass entweder nur das Material der Platte fließt, während der Stempel in seiner Form unverändert bleibt, oder dass der Fließvorgang des Stempels erst gegen Ende des Quetschvorgangs beginnt, wenn die Presskräfte ausreichend hoch sind. In jedem Fall ist gewährleistet, dass die Qualität der einzelnen nach dem Verfahren hergestellten Verbindungspunkte gleich gut sind.

Um den erfindungsgemäßen Quetschvorgang zu erzielen, muss im Unterschied zum Stand der Technik, während des Quetschvorgangs das Volumen der Matrize in und quer zur Pressrichtung unveränderbar sein, so dass während des Quetschvorgangs der Raum für das verdrängte Material in Längssowie Querausdehnung unnachgiebig begrenzt ist. Durch die entsprechende, einen günstigen Materialfluss bewirkende Gestaltung der Matrize kann dadurch eine besonders hohe Festigkeit der Verbindung erzielt werden.

Die Matrize kann aber in unterschiedlicher Weise gestaltet sein, z. B. als Topf mit starren oder als Matrize mit flexiblen Wänden.

Nach einer vorteilhaften Ausgestaltung der Erfindung werden mehrere aufeinanderliegende Platten oder Plattenabschnitte miteinander verbunden, in dem beim Tiefzieh- und Quetschvorgang entsprechende übereinanderliegende Flächenabschnitte der Platten miteinander in die Matrize tiefgezogen und dann verquetscht werden, wonach der verlorene Stempel in der Eindringöffnung verbleibt und wobei die verformten Flächenabschnitte der einen Platte, in Pressrichtung gesehen, die unter dieser Platte liegende nächste Platte hintergreifen, und ggf. die entsprechenden Flächenabschnitte dieser Platte möglicherweise eine nächste darunterliegende Platte hintergreifen. Hier ist besonders von Vorteil, dass der Stempel aus härterem Material besteht und dadurch in Zusammenwirkung mit der ebenfalls harten beim Quetschvorgang unnachgiebigen Matrizenöffnug den gewünschten Materialfluss bei den verformbaren Abschnitten zu erhalten. Vorteilhafterweise kann dabei nach den Tiefzieh- und Quetschvorgängen die freie Stirnseite des Stempels in die Plattenebene fallen. Hierdurch wird eine durch den Tiefziehvorgang des Stempels geschaffene Öffnung durch diesen geschlossen.

Es ist zwar bekannt, zwei aufeinanderliegende Platten durch einen Tiefzieh- und danach einen Quetschvorgang in einem Arbeitsgang miteinander zu verbinden (EP-PS 0 215 449), wobei allerdings der Stempel wieder aus seiner Eindringöffnung herausgezogen wird und somit weder als zusätzliches Verbindungsmittel noch als nietartiger Zusatz verwendet wird.

Nach einer die erfindungsgemäße Pressvorrichtung betreffenden vorteilhaften Ausgestaltung, bei der als Sacköffnung mit festen Begrenzungen ausgebildeten Tiefziehöffnung, deren Seitenwände in Bewegungsrichtung des Pressstößels sich leicht nähern ausgebildet sind und die wie deren Boden durchgehend und unnachgiebig sind, ist im Randbereich des Bodens der Tiefziehöffnung eine umlaufende Erhebung vorhanden. Bei den bekannten Werkzeugen (DE-OS 4404659) ist im Gegensatz hierzu im Boden der Tiefziehöffnung eine umlaufende Vertiefung bzw. im Stempel vorhanden. Dadurch wird während des Pressvorgangs Material in diese Vertiefungen geschoben, wodurch dort diese ungewünschte druckknopfartige Verhakung bei entsprechender Materialansammlung entsteht. Bei der Erfindung hingegen wird gerade in diesem Bereich aufgrund der umlaufenden Erhebung das Material aus dem Bodenbereich der tiefgezogenen Flächenteile der Platte radial um den Stempel wieder nach oben verdrängt, wodurch einerseits eine Verbesserung der Verhakung entsteht, vor allem aber eine fest formschlüssige Verbindung zum verlorenen Stempel hin, der erfindungsgemäß in der Eindringöffnung verbleibt.

Nach einer zusätzlichen diesbezüglichen Ausgestaltung der Erfindung ist die umlaufende Erhebung im Innendurchmesser gleich oder größer als der Stempeldurchmesser. Hierdurch wird vermieden, dass zwischen Oberseite Erhebung und Unterseite des Stempels ein den Materialfluss beeinträchtigender Engpass entsteht.

Nach einer zusätzlichen vorteilhaften Ausgestaltung der Erfindung weist der Pressstößel auf seiner Stirnseite eine zentrale Sackbohrung zur Führung des verlorenen Stempels auf. Eine solche Sackbohrung ist an sich bekannt (DE-PS 30 03 908), wobei sich beim Einpassen des verlorenen Stempels der Pressstößel auf einer Schulter oder Stirnseite des Stempels abstützen kann, wobei ein Gewindebolzen odgl. in die Sackbohrung hineinragen kann.

Nach einer zusätzlichen vorteilhaften Ausgestaltung der Erfindung ist der Pressstößel in einem Spannteil geführt, welches Zuführöffnungen in ansich bekannter Weise (DE-OS 4404659 A1) für den verlorenen Stempel aufweist, um beim Rückhub und vor neuerlichem Presshub zur Herstellung eines neuerlichen Verbindungspunktes einen nächsten verlorenen Stempel vorzulagern. Mit diesem Spannteil kann gleichzeitig die Platte auf die Matrize gespannt werden, bevor dann der Pressstößel mit Stempel in die Plattenfläche eingepresst wird. Über eine solche Zuführöffnung kann auch eine automatische Ladung des Werkzeuges für den verlorenen Stempel erfolgen.

Nach einer zusätzlichen Ausgestaltung der Erfindung ist der zulässige Stößelhub derart gewählt, dass eine Durchtrennung der Platte vermieden wird und dennoch eine Quetschung der tiefgezogenen Flächenteile stattfindet. Eine solche Hubbestimmung ist für ein Presswerkzeug unproblematisch.

Nach einer zusätzlichen vorteilhaften Ausgestaltung der Erfindung weist der Stempel in dem die Plattenoberfläche durchdringenden Bereich mindestens eine Ausnehmung auf, in welche beim Quetschvorgang Material hintergreifend verdrängt wird. Hierdurch entsteht eine nietartige Verbindung. Diese Ausnehmung kann in unterschiedlichster Art ausgestaltet sein, vorzugsweise wird sie als Ringnut oder als umlaufende Ausnehmung ausgebildet sein. So können mehrere derartige Ringausnehmungen vorgesehen sein.

Nach einer zusätzlichen diesbezüglichen Ausgestaltung der Erfindung sind zwei Ringnuten parallel im Stempel vorhanden, mit einem Mindestabstand zur Vermeidung eines Brechens während des Quetschvorgangs. Besonders bei dem hohen Druck, der für den Quetschvorgang erforderlich ist, entstehen durch das verdrängte Plattenmaterial innerhalb der Ringnut Trennkräfte, die zu einem Abreißen führen könnten. Die dadurch gegebene "Sollknickstelle" wird abgestimmt auf das Stempelmaterial sowie die Matrizenform, wobei der Rohling zur Erzielung einer solchen "Sollknickstelle" auch ohne Ringnuten versehen sein kann.

Nach einer zusätzlichen diesbezüglichen Ausgestaltung der Erfindung sind die Übergänge auf der radialen Mantelfläche und/oder von dieser zur in Pressrichtung weisenden Stirnseite des Stempels abgerundet. Eine solche Abrundung der Übergänge fördert das Fließen des verdrängten gequetschten Materials.

Nach einer zusätzlichen vorteilhaften Ausgestaltung der Erfindung dient der Stempel als Verbindungsmittel zu anderen Bauelementen und weist dafür eine Eingriffsmöglichkeit auf, wobei eine solche Eingriffsmöglichkeit entweder ein nach seinem Einbau über die Platte herausragender Zapfen sein kann, an welchem ein Außengewinde eine Eingriffsringnut odgl. angeordnet ist, oder es handelt sich um eine Bohrung mit Gewinde, Einhaknut odgl. am Stempel, oder um sonst eine Eingriffsmöglichkeit magnetischer oder sonstiger Natur. Natürlich können erfindungsgemäß neben einem solchen eine Eingriffsmöglichkeit aufweisenden Verbindungsmittel auch mit der Platte weitere Platten verbunden sein, wie es weiter oben beschrieben ist. Maßgebend ist, dass der Stempel als verlorenes Werkzeug in der Einpressöffnung verbleibt.

Nach einer zusätzlichen vorteilhaften Ausgestaltung der Erfindung ist die radiale Mantelfläche des Stempels als Verdrehsicherung prismatisch ausgebildet, so dass das verdrängte Material ein Verdrehen des Stempels in der ihn aufnehmenden Öffnung verhindert.

Ein Ausführungsbeispiel des erfindungsgemäßen Verfahrens und des Stempels ist in der Zeichnung stark vereinfacht dargestellt und im folgenden näher beschrieben.

Es zeigen:
- Fig. 1 und 2: das Werkstück und Werkzeug vor und nach Herstellung der Verbindung,
- Fig. 3, 4, 5 und 6: vier verschiedene Varianten eines verlorenen Stempels und
- Fig. 7: Werkzeuge und Werkstücke im Längsschnitt und in Explosionsdarstellung

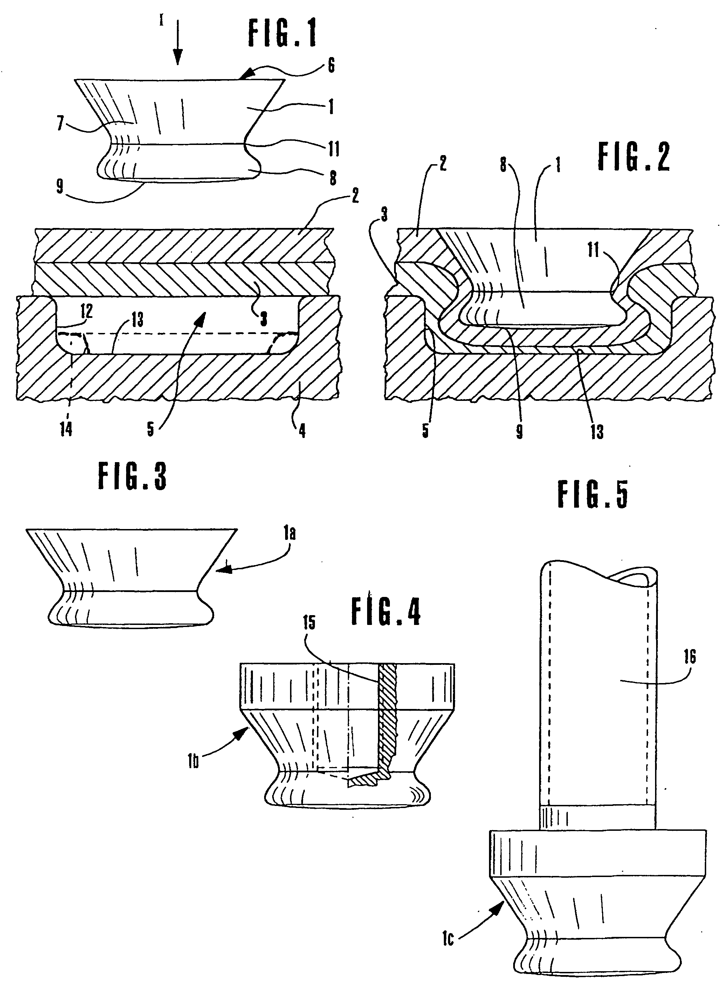

In Fig. 1 ist ein erfindungsgemäßer verlorener Stempel 1 oberhalb von zwei übereinanderliegenden Metallplatten 2 und 3 dargestellt, welche wiederum auf einer Matrize 4 liegen, die zu den Metallplatten hin eine Tiefziehöffnung 5 aufweist. Der Stempel 1 ist normalerweise in einem nicht dargestellten Führungsteil in Richtung des Pfeiles I verschiebbar gelagert und wird in Richtung Metallplatten 2, 3 durch einen Pressstößel, der ebenfalls nicht dargestellt ist, angetrieben. Der Stempel 1 weist eine Stirnfläche 6 auf, sowie einen Eindringabschnitt 7, der sich zur Stirnfläche 6 hin erweitert und auf der anderen Seite in einen Kopf 8 mit Bodenseite 9 übergeht. Zwischen dem Eindringabschnitt 7 und dem Kopf 8 besteht eine Verjüngung in Form einer Ringnut 11.

Die Tiefziehöffnung 5 der Matrize 4 weist zylindrische Seitenwände 12 sowie einen ebenen Boden 13 auf. Zwischen Seitenwänden 12 und Boden 13 kann, wie gestrichelt angedeutet, eine umlaufende Erhebung 14 vorhanden sein.

In Fig. 2 ist der Stempel 1 in seiner Endlage dargestellt. Diese Endlage nimmt der verlorene Stempel ein, wenn er in einem Arbeitsgang zwei Funktionen des erfindungsgemäßen Verbindungsverfahrens bewirkt hat, nämlich
- erstens: ein Tiefziehen von Flächenteilen der Platten 2 und 3 in die Tiefziehöffnung 5 hinein und
- zweitens: ein Verdrängen des zwischen seiner Bodenseite 9 und dem Boden 13 der Tiefziehöffnung 5 befindlichen Materials radial nach außen, wobei dieses Material hinter den Kopf 8, also in die Verjüngung 11 des Stempels 1 fließt. Der Stempel 1 wird dadurch fest eingebunden, so dass eine sowohl formschlüssige wie kraftschlüssige Verbindung entsteht. Sobald die Verbindung entstanden ist, wird sie komplett aus der Tiefziehöffnung 5 herausgehoben.

Durch die angedeutete Erhebung 14 kann eine Verbesserung dieses Materialflusses in Richtung Verjüngung 11 erzielt werden. Nach dem Abschluss der beiden Verfahrensschritte ist die Oberseite des Stempels bündig mit der Oberfläche der Metallplatte 2.

Statt mit dem Stempel nietartig zwei oder mehrere Metallplatten in der beschriebenen Art zu verbinden, kann erfindungsgemäß der Stempel 1 auch nur in eine Platte in der erfindungsgemäßen Art hineinverbunden werden, wobei das Verfahren grundsätzlich in gleicher Art erfolgt, nur dass statt zwei aufeinanderliegender Platten eine einzige Platte verwendet wird. Auch hier erfolgt zuerst ein Tiefziehvorgang und danach ein Quetschvorgang; wobei ebenfalls das verquetschte Material hinter den Kopf fließt und dadurch eine feste Verbindung dieses verlorenen Stempels in der Eindringöffnung der Platte gegeben ist. Um diesen Vorgang zu optimieren, besteht der Stempel 1 aus einem härteren Material als die Metallplatte oder die Metallplatten, so dass der Stempel selber keine Verformung erfährt, ähnlich wie auch die Tiefziehöffnung 5 der Matrize 4, während des Pressvorgangs keinerlei Verformung erfährt.

Erfindungsgemäß kann der Stempel 1 als Anbindemittel für weitere Bauteile dienen, wofür an seiner freien Stirnseite Angriffsmöglichkeiten vorhanden sein können. Erfindungsgemäß kann somit der Stempel einerseits zur Verbindung mehrerer Metallplatten durch das dargestellte Einpressverfahren dienen und außerdem möglicherweise nur an einer Platte angeordnet über Eingriffsmöglichkeiten zum Verbinden anderer Bauteile.

In Fig. 3 ist der Stempel la für sich dargestellt, so wie man ihn möglicherweise als verlorenen Niet zum Verbinden mehrerer Platten verwenden würde, wonach die Eindringöffnung des Stempels nach oben verschlossen wäre.

In Fig. 4 ist der Stempel 1b mit einer zentralen Gewindebohrung 15 dargestellt und zwar im Teilschnitt, wobei an diese Gewindebohrung 15 als Eingriffsmöglichkeit andere zu verbindende Teile schraubbar sind. Vorteilhafterweise kann eine solche Gewindebohrung verhältnismäßig tief in den Stempel eindringen, so dass ungenutzte derartige Stempel in eingebautem Zustand nicht weiter stören.

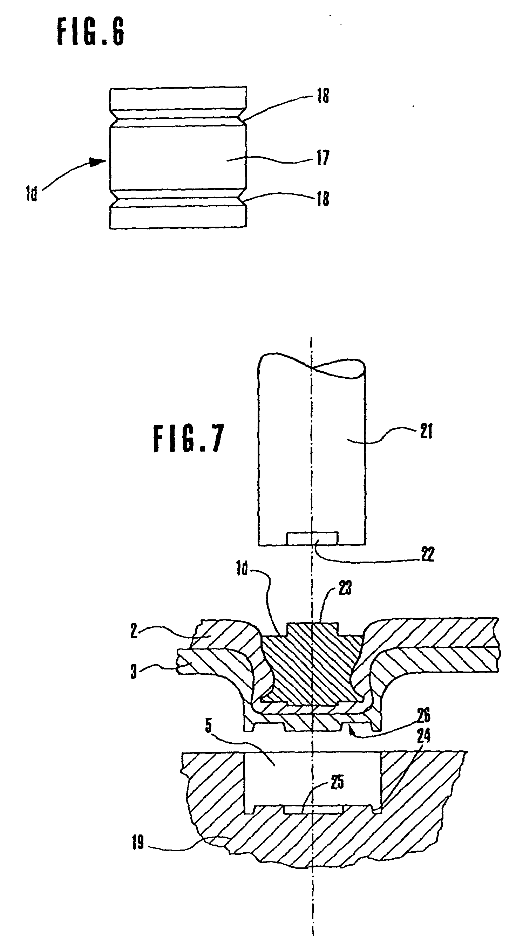

In Fig. 5 ist ein Stempel 1c dargestellt, auf dessen Oberseite als Eingriffsmöglichkeit ein Gewindebolzen 16 angeordnet ist, an dem weitere Bauteile befestigbar sind.

In Fig. 6 ist ein Stempel 1d dargestellt, der weitgehend zylindrisch ausgebildet ist und auf dessen äußerer Mantelfläche 17 zwei Ringnuten 18 angeordnet sind, in die sich das beim Quetschvorgang von den Metallplatten 2 und 3 verdrängte Material hineinquetscht und wobei der Abstand zwischen den zwei Ringnuten 18 auf Material und Durchmesser abgestimmt sein muss. So fließt dieser als Niet wirkende Stempel bei geringerem Durchmesser etwas weniger auseinander als bei größerem Durchmesser.

In Fig. 7 ist stark vereinfacht Werkzeug und Werkstück im Längsschnitt- und in Explosionsdarstellung gezeigt, nämlich der verlorene Stempel 1d eingefügt in den Metallplatten 2 und 3, jeweils zwischen der Matrize 19 und einem Pressstößel 21. Der Pressstößel 21 weist auf seiner dem Stempel 1d zugewandten Seite eine Ausnehmung 22 auf, welche beim verlorenen Stempel zu einer Erhebung 23 geführt hatte. Die Matrize 19 wiederum weist im Boden ihrer Tiefziehöffnung 5 eine Stirnringnut 24 und eine Vertiefung 25 auf, die zu einer entsprechenden Gestaltung 26 auf der Unterseite der Metallplatte 3 im Bereich des Verbindungspunktes geführt hat. Die Ausgestaltung der Ausnehmung 22, der Stirnringnut 24 und der Vertiefung 25 sind auf die Abmessungen und das Material im Bereich dieses Verbindungspunktes abgestimmt, um die z. B. dargestellte nietartige Verformung zu erzielen.

### Bezugszahlenliste

- 1: verlorener Stempel
- 1 a, b, c, d: verschiedene Stempelvarianten
- 2: Metallplatte
- 3: Metallplatte
- 4: Matrize
- 5: Tiefziehöffnung
- 6: Stirnseite
- 7: Eindringabschnitt
- 8: Kopf
- 9: Bodenseite
- 10: ---
- 11: Verjüngung (Ringnut)
- 12: Seitenwände
- 13: Boden
- 14: Erhebung
- 15: Gewindebohrung
- 16: Gewindebolzen
- 17: Mantelfläche
- 18: Ringnuten
- 19: Matrize
- 20: ---
- 21: Pressstößel
- 22: Ausnehmung
- 23: Erhebung
- 24: Stirnringnut
- 25: Vertiefung
- 26: Gestaltung

- I: Pressrichtung

## Patentansprüche

1. Verfahren zum Verbinden von Bauteilen, wie Platten (3), Bolzen (16), Muttern (15) odgl, mit einer Platte (2),
bei welchem mittels eines verlorenen Stempels (1) und den Seitenwänden (12) bzw. dem Boden (13) der Matrizenöffnung (5) einer dem Stempel (1) gegenüber angeordneten Matrize (4) und ohne Durchtrennung der Platte (2) Flächenabschnitte der Platte zuerst tiefgezogen und danach verquetscht werden, wobei das beim Verquetschen verdrängte Material in Achsrichtung (I) als auch quer zu dieser verformt wird und dabei einerseits den stehen gebliebenen Teil der Platte (2) hintergreift und andererseits mit der Mantelfläche des Stempels (1) eine formschlüssige Verbindung eingeht,
**dadurch gekennzeichnet,**
- **dass** das Material des verlorenen Stempels (1) härter ist als das der Platte (2, 3), so dass ein Fließen des Stempelmaterials erst beim Quetschvorgang nach dem Tiefziehen stattfinden kann, und
- **dass** die während des Quetschvorgangs in ihrem Volumen in und quer zur Pressrichtung (I) unveränderbare Matrize (5) den Quetschvorgang des verdrängten Materials in Längssowie Querausdehnung unnachgiebig begrenzt.

2. Verfahren nach Anspruch 1,
**dadurch gekennzeichnet,**
**dass** für die formschlüssige Verbindung verquetschtes Plattenmaterial radial in Richtung Stempel (1) entweder in dort vorhandene Ausnehmungen pressbar oder solche dort bildend ist.

3. Verfahren nach Anspruch 1 oder 2,
**dadurch gekennzeichnet,**
**dass** mehrere aufeinanderliegende Platten (2, 3) oder Plattenabschnitte miteinander verbunden werden, indem beim Tiefzieh- und Quetschvorgang entsprechende übereinanderliegende Flächenabschnitte der Platten (2, 3) miteinander in die Matrize (5) tiefgezogen und dann verquetscht werden, wonach der verlorene Stempel (1) in der Eindringöffnung verbleibt und wobei Flächenabschnitte der einen Platte (2, 3), in Pressrichtung (I) gesehen, die unter dieser Platte (2) liegende nächste Platte (3) hintergreifen, und ggf. die entsprechenden Flächenabschnitte dieser Platte (3) möglicherweise eine nächste darunterliegende Platte hintergreifen.

4. Pressvorrichtung zum nietartigen Verbinden von Bauteilen, wie Platten (3), Bolzen (16), Muttern (15) odgl, mit einer Platte (2),
- mit einer eine Tiefziehöffnung (5) aufweisenden Matrize (4),
- mit einem in Richtung Matrize (4) betätigten Pressstößel (21) und
- mit einem in die Platte (2) bzw. Tiefziehöffnung (5) pressbaren verlorenen Stempel (1)
insbesondere zur Durchführung des Verfahrens nach einem der Ansprüche 1 bis 3,
**dadurch gekennzeichnet,**
- **dass** die Tiefziehöffnung (5) als Sacköffnung zylindrisch oder in Pressrichtung (I) sich leicht verjüngend ausgebildet ist und
- **dass** die Seitenwände (12) und der Boden (13) der Matrize (5) durchgehend und unnachgiebig sind.

5. Pressvorrichtung nach Anspruch 4,
**dadurch gekennzeichnet,**
**dass** im Randbereich des Bodens (13) der Tiefziehöffnung (5) eine umlaufende Erhebung (14) vorhanden ist.

6. Pressvorrichtung nach Anspruch 5,
**dadurch gekennzeichnet,**
**dass** die umlaufende Erhebung (14) im Innendurchmesser gleich oder größer als der Stempeldurchmesser ist.

7. Pressvorrichtung nach einem der Ansprüche 4 bis 6,
**dadurch gekennzeichnet,**
**dass** der Pressstößel auf seiner Stirnseite eine zentrale Sackbohrung zur Führung des verlorenen Stempels aufweist.

8. Pressvorrichtung nach einem der Ansprüche 4 bis 7,
**dadurch gekennzeichnet,**
**dass** der Pressstößel (21) in einem Spannteil geführt ist, welches Zuführöffnungen für den verlorenen Stempel (1) aufweist, um beim Rückhub und vor neuerlichem Presshub einen nächsten verlorenen Stempel (1) vorzulagern.

9. Pressvorrichtung nach einem der Ansprüche 4 bis 8,
**dadurch gekennzeichnet,**
**dass** der Stößelhub bzw. -weg begrenzt ist, damit der verlorene Stempel (1) eine Durchtrennung der Platte (2;3) vermeidet, jedoch eine Quetschung der tiefgezogenen Teile ermöglicht.

10. Pressvorrichtung nach einem der Ansprüche 4 bis 9,
**dadurch gekennzeichnet,**
- **dass** der Stempel (1) eine ausreichende Härte aufweist, um als quasi Werkzeug das Plattenmaterial tiefzuziehen und zu verquetschen und um danach, in seiner Endlage, formschlüssig und kraftschlüssig eingepresst zu sein und
- **dass** der Stempel (1) in seiner radialen Mantelfläche an dem die Plattenoberfläche durchdringenden Abschnitt mindestens eine Ausnehmung (11) aufweist, in welche beim Quetschvorgang Material hintergreifend verdrängt wird.

11. Pressvorrichtung nach Anspruch 10,
**dadurch gekennzeichnet,**
**dass** die Ausnehmung (11) ringnutartig ist.

12. Pressvorrichtung nach Anspruch 10 oder 11,
**dadurch gekennzeichnet,**
**dass** zwei Ringnuten (18) parallel im Stempel (1) vorhanden sind, mit einem Mindestabstand zur Vermeidung eines Trennbruchs während des Quetschvorgangs.

13. Pressvorrichtung nach einem der Ansprüche 4 bis 12,
**dadurch gekennzeichnet,**
**dass** die Übergänge auf der radialen Mantelfläche und/oder von dieser zur in Pressrichtung (I) weisenden Stirnseite (9) des Stempels (1) abgerundet sind.

14. Pressvorrichtung nach einem der Ansprüche 4 bis 13,
**dadurch gekennzeichnet,**
- **dass** der Stempel (1) als Verbindungsmittel zu anderen Bauelementen dient und
- **dass** ein nach seinem Einbau über die Platte hinausragender Zapfen (16) vorhanden ist, auf welchem ein Außengewinde, eine Eingriffsnut odgl. angeordnet ist, oder
- **dass** eine Bohrung (15) mit Gewinde, Einhaknut odgl. im Stempel vorhanden ist.

15. Pressvorrichtung nach einem der Ansprüche 4 bis 14,
**dadurch gekennzeichnet,**
**dass** die radiale Mantelfläche des Stempels als Verdrehsicherung prismatisch ausgebildet ist.

## Claims

1. A method for connecting structural parts such as plates (3), bolts (16) and nuts (15) or the like to a plate (2), in which surface sections of the plate are first deep-drawn and then crushed by means of a sunken punch (1) and the side walls (12) or the floor (13) of the matrix opening (5) of a matrix arranged opposite the punch (1) and without breaking through the plate (2), whereby the material displaced by crushing is deformed in an axial direction (I) and transversally thereto and at the same time on one hand engages behind the upright part of the plate (2) and on the other hand causes a positive connection, **characterised in that**
- the material of the sunken punch (1) is harder than that of the plate (2, 3), such that flowing of the punch material can take place only during the crushing procedure after deep-drawing, and
- the matrix (5) unchangeable in volume during the crushing procedure and transverse to the pressing direction (I) limits the crushing procedure of the displaced material inflexibly in longitudinal and transverse expansion.

2. The method as claimed in Claim 1, **characterised in that** for the positive connection crushed plate material can be pressed radially in the direction of said punch (1) either into recesses available there or forming such there.

3. The method as claimed in Claim 1 or 2, **characterised in that** several superposed plates (2, 3) or plate sections are joined to one another, **in that** during the deep-drawing and crushing procedure corresponding superposed surface sections of the plates (2, 3) are deep-drawn with one another in the matrix (5) and then crushed, after which the sunken punch (1) remains in the penetration opening and whereby surface sections of the one plate (2, 3), viewed in the pressing direction (I), engage behind the next plate (3) lying under said plate (2), and optionally the corresponding surface sections of said plate (3) possibly engage behind the next subjacent plate.

4. A pressing device for riveting structural components, such as plates (3), bolts (16), nuts (15) or the like, with a plate (2),
- with a matrix (4) having a deep-draw opening (5),
- with a press plunger (21) actuated in the direction of the matrix (4) and
- with a sunken punch (1) which can be pressed into the plate (2) or the deep-drawn opening (5),
in particular for carrying into effect the method as claimed in any one of Claims 1 to 3, **characterised in that**
- the deep-drawn opening (5) is configured cylindrically as a sack hole or tapering slightly into the pressing direction (I) and
- the side walls (12) and the floor (13) of the matrix (5) are continuous and inflexible.

5. The device as claimed in Claim 4, **characterised in that** there is a peripheral elevation (14) in the edge region of the bottom (13) of the deep-draw opening (5) .

6. The device as claimed in Claim 5, **characterised in that** the peripheral elevation (14) has a same or a larger inner diameter than a diameter of said punch.

7. The device as claimed in any one of Claims 4 to 6, **characterised in that** said press plunger has a central blind bore at an end thereof for guiding said sunken punch.

8. The device as claimed in any one of Claims 4 to 7, **characterised in that** the clamping member guides said press plunger (21), which has supply openings for said sunken punch (1) to load a further sunken punch (1) during a return stroke and before a renewed pressing stroke.

9. The device as claimed in any one of Claims 4 to 8, **characterised in that** the plunger stroke or plunger trajectory is limited so that said sunken punch (1) is prevented from breaking through said plate (2, 3), yet allows crushing of deep-drawn parts.

10. The device as claimed in any one of Claims 4 to 9, **characterised in that**
- the punch (1) has sufficient hardness for deep-drawing and crushing the plate material as a quasi tool and afterwards for being pressed in a positive and non-positive fit in its end position, and
- the punch (1) has at least one recess (11), in which material is pressed during the crushing procedure, in its radial mantle surface on the section breaking through plate surface.

11. The device as claimed in Claim 10, **characterised in that** the recess (11) has the form of an annular groove.

12. The device as claimed in Claim 10 or 11, **characterised in that** there are two annular grooves(18) parallel in the punch (1), having a minimum distance for preventing a breakthrough during the crushing procedure.

13. The device as claimed in any one of Claims 4 to 12, **characterised in that** the transitions on the radial mantle surface and/or from the latter to the front side (9) of the punch (1) pointing in the pressing direction (I) are rounded.

14. The device as claimed in any one of Claims 4 to 13, **characterised in that**
- the punch (1) serves as connecting means to other structural components and
- there is a trunnion (16) protruding out over the plate after being installed, on which is arranged an outer thread, an engagement groove of the like, or
- there is a bore (15) with thread, hooking groove or the like.

15. The device as claimed in any one of Claims 4 to 14, **characterised in that** said punch has a radial surface area designed as a rotation-preventing prism.

## Revendications

1. Procédé en vue de relier des composants tels que des plaques (3), des boulons (16), des écrous (15) ou similaires à une plaque (2),
dans lequel des portions de surface de la plaque sont tout d'abord embouties puis broyées au moyen d'un poinçon perdu (1) et des parois latérales (12) ou du sol (13) de l'ouverture de matrice (5) d'une matrice (4) disposée en face du poinçon (1) et sans cassure de la plaque (2), le matériau compressé lors du broyage étant déformé dans la direction axiale (I) ainsi que transversalement à celle-ci et ce faisant d'un côté accroche par l'arrière la partie restante de la plaque (2) et d'un autre côté subit une liaison par conjugaison de formes avec la surface latérale du poinçon (1),
**caractérisé en ce que**
- le matériau du poinçon perdu (1) est plus dur que celui de la plaque (2, 3) de sorte qu'un écoulement du matériau du poinçon ne puisse se produire que lors du processus de broyage après l'emboutissage, et
- **en ce que** la matrice (5) non modifiable dans son volume dans la direction de pressage (I) et transversalement à la direction de pressage (I) pendant le processus de broyage limite de manière non souple le processus de broyage du matériau compressé dans l'extension longitudinale et transversale.

2. Procédé selon la revendication 1,
**caractérisé en ce que**
du matériau de plaque broyé pour la liaison par conjugaison de formes peut être pressé de manière radiale dans la direction du poinçon (1) soit dans des évidements qui y sont présents soit en y formant de tels évidements.

3. Procédé selon la revendication 1 ou 2,
**caractérisé en ce que**
plusieurs plaques superposées (2, 3) ou des portions de plaque sont reliées l'une à l'autre en emboutissant lors du processus d'emboutissage et de broyage des portions de surface superposées correspondantes des plaques (2, 3) l'une avec l'autre dans la matrice (5) et en les broyant ensuite, le poinçon perdu (1) restant dans l'ouverture de pénétration et des portions de surface d'une plaque (2, 3) s'accrochant par l'arrière vu la direction de pressage (I) à la plaque (3) suivante se trouvant sous cette plaque (2) et les portions de surface correspondantes de cette plaque (3) s'accrochant éventuellement par l'arrière à une plaque suivante se trouvant en dessous.

4. Dispositif de pressage en vue de relier à la manière d'un rivet des composants tels que des plaques (3), des boulons (16), des écrous (15) ou similaires à une plaque (2),
- avec une matrice (4) présentant une ouverture d'emboutissage (5),
- avec un coulisseau de pressage (21) actionné dans la direction de la matrice (4) et
- avec un poinçon perdu (1) pouvant être pressé dans la plaque (2) ou dans l'ouverture d'emboutissage (5),
notamment en vue de la réalisation du procédé selon l'une quelconque des revendications 1 à 3,
**caractérisé en ce que**
- l'ouverture d'emboutissage (5) est réalisée de manière cylindrique en tant qu'ouverture borgne ou se rétrécissant légèrement dans la direction de pressage (I) et
- **en ce que** les parois latérales (12) et le sol (13) de la matrice (5) sont continus et non souples.

5. Dispositif de pressage selon la revendication 4,
**caractérisé en ce qu'**
un rehaussement périphérique (14) est présent dans la région de bordure du sol (13) de l'ouverture d'emboutissage (5).

6. Dispositif de pressage selon la revendication 5,
**caractérisé en ce que**
le rehaussement périphérique (14) est supérieur ou égal au niveau de son diamètre intérieur au diamètre du poinçon.

7. Dispositif de pressage selon l'une quelconque des revendications 4 à 6,
**caractérisé en ce que**
le coulisseau de pressage présente sur son côté frontal un alésage borgne central en vue du guidage du poinçon perdu.

8. Dispositif de pressage selon l'une quelconque des revendications 4 à 7,
**caractérisé en ce que**
le coulisseau de pressage (21) est guidé dans une partie de serrage, laquelle présente des ouvertures d'amenée pour le poinçon perdu (1) afin de stocker au préalable un poinçon perdu suivant (1) lors de la course arrière et avant la nouvelle course de pressage.

9. Dispositif de pressage selon l'une quelconque des revendications 4 à 8,
**caractérisé en ce que**
la course ou le trajet du coulisseau est limité afin que le poinçon perdu (1) évite une cassure de la plaque (2 ; 3) tout en permettant toutefois un broyage des parties embouties.

10. Dispositif de pressage selon l'une quelconque des revendications 4 à 9,
**caractérisé en ce que**
- le poinçon (1) présente une dureté suffisante pour emboutir et broyer en tant que quasi outil le matériau de la plaque et ensuite être pressé dans sa position finale par conjugaison de formes et entraîné par adhérence et
- **en ce que** le poinçon (1) présente au moins un évidement (11) dans sa surface latérale radiale sur la portion traversant la surface de la plaque, évidement dans lequel du matériau est compressé de manière à s'accrocher par l'arrière lors du processus de broyage.

11. Dispositif de pressage selon la revendication 10,
**caractérisé en ce que**
l'évidement (11) est de type rainure annulaire.

12. Dispositif de pressage selon la revendication 10 ou 11,
**caractérisé en ce que**
deux rainures annulaires (18) sont présentes en parallèle dans le poinçon (1) avec une distance minimale en vue d'éviter une rupture par séparation pendant le processus de broyage.

13. Dispositif de pressage selon l'une quelconque des revendications 4 à 12,
**caractérisé en ce que**
les transitions sur la surface latérale radiale et/ou de celle-ci vers le côté frontal (9) tourné dans la direction de pressage (I) du poinçon (1) sont arrondies.

14. Dispositif de pressage selon l'une quelconque des revendications 4 à 13,
**caractérisé en ce que**
- le poinçon (1) sert de moyen de liaison à d'autres composants et
- **en ce qu'**un tourillon (16) dépassant de la plaque après son insertion sur lequel un filetage extérieur, une rainure d'engagement ou similaire est disposé est présent, ou
- **en ce qu'**un alésage (15) est présent avec un filetage, une rainure d'accrochage ou similaire dans le poinçon.

15. Dispositif de pressage selon l'une quelconque des revendications 4 à 14,
**caractérisé en ce que**
la surface latérale radiale du poinçon est réalisée en tant que sécurité contre la rotation de manière prismatique.
